Europäisches Patentamt

European Patent Office

Office européen des brevets

(11) Veröffentlichungsnummer: **0 349 806 B1**

## (12) EUROPÄISCHE PATENTSCHRIFT

(45) Veröffentlichungstag der Patentschrift: **21.09.94**

(51) Int. Cl.⁵: **D21B 1/32**, D21F 1/70

(21) Anmeldenummer: **89110963.9**

(22) Anmeldetag: **16.06.89**

---

(54) Anlage zur Aufbereitung von Altpapier.

---

(30) Priorität: **02.07.88 DE 3822454**

(43) Veröffentlichungstag der Anmeldung:
**10.01.90 Patentblatt 90/02**

(45) Bekanntmachung des Hinweises auf die
Patenterteilung:
**21.09.94 Patentblatt 94/38**

(84) Benannte Vertragsstaaten:
**AT CH ES FR GB IT LI NL SE**

(56) Entgegenhaltungen:
**EP-A- 0 014 448**
**DE-A- 1 177 465**
**DE-A- 2 511 435**
**DE-A- 3 529 638**

(73) Patentinhaber: **J.M. Voith GmbH**
**St. Pöltener-Strasse 43**
**D-89522 Heidenheim (DE)**

(72) Erfinder: **Pfalzer, Lothar**
**Lichtensteinstrasse 20**
**D-7920 Heidenheim (DE)**

(74) Vertreter: **Weitzel, Wolfgang, Dr.-Ing.**
**Friedenstrasse 10**
**D-89522 Heidenheim (DE)**

---

## Beschreibung

Die Erfindung betrifft eine Anlage zur Aufbereitung von Altpapier entsprechend dem Oberbegriff des Patentanspruchs 1. Eine solche Anlage ist bekanntgeworden durch die DE-OS 28 13 448. Bei dieser Anlage wird das im Eindicker anfallende Eindickerwasser in einer weiteren Flotationsanlage von dem enthaltenen Schmutz selektiv gereinigt.

Ebenso wird gemäß "Wochenblatt für Papierfabrikation" 1976, Seite 780, Waschfiltrat einer Anlage zur Aufbereitung von Altpapier in sogenannten Flotationsstoff-Fängern geklärt, welche nach dem Prinzip der Flotation arbeiten. Diese Flotationseinrichtungen, z.B. entsprechend "Das Papier", 1975, Seite V 159, arbeiten praktisch ohne Turbulenz, so daß alle in dem Waschfiltrat enthaltenen Schwebstoffe einerseits durch Sedimentation nach unten andererseits durch Flotation nach oben ausgetragen werden. Es verbleibt praktisch nur ein ganz geringer zu vernachlässigender Teil derselben in dem Filtrat. Man kann auf diese Weise das geklärte Waschfiltrat wieder als Waschwasser in den Kreislauf zurückführen. Diese Maßnahme ist relativ selbstverständlich, da man ja eine Wasserverschwendung durch unnötig hohen Wasserverbrauch vermeiden muß, andererseits aber auch relativ sauberes Wasser für eine Wäsche verwenden muß. Eine ähnliche Anlage ist auch bekannt aus "Paper Technology", 1971, Seiten 282/283.

Die Aufgabe der Erfindung ist es, mit der Flotation die Schmutzabscheidung in der Altpapiersuspension selbst, also im Hauptkreis zu verbessern. Diese Aufgabe wird erfindungsgemäß durch die Merkmale des kennzeichnenden Teils des Patentanspruchs 1 gelöst.

Es eignet sich als erste Flotationsstufe vorwiegend eine mit höchstens wenigen großen Injektoren ausgestattete Flotationszelle, z.B. entsprechend DE-OS 36 34 903. Für die Flotationseinrichtung der zweiten Flotationsprozeßstufe eignen sich Zellen mit Dispergierrad entsprechend US-PS 42 67 052 oder Flotationszellen mit sehr vielen Injektoren der Bauart nach GB-A 20 41 788. Hierbei hat man eine relativ kleine Blasengröße bei relativ kleinem Luftmengenverhältnis zur Suspensionsmenge.

Es wird durch die Aufteilung der Flotation auf mindestens zwei Behandlungsstufen erreicht, daß entsprechend den charakteristischen Flotationsmerkmalen der zu flotierenden Stoffe eine bestmögliche Abscheidung derselben erfolgen kann. Durch eine Flotation großer Turbulenz und mit großen Durchmessern der Luftblasen werden relativ große Verunreinigungen, und durch eine Flotation mit geringer Turbulenz werden relativ kleine Verunreinigungen oder solche mit geringer Hydrophobie am besten abgeschieden.

Weitere vorteilhafte Ausgestaltungen der Erfindung sind Gegenstand der abhängigen Ansprüche 2-4.

Nachfolgend wird die Erfindung anhand der in den Figuren der Zeichnung dargestellten Ausführungsbeispiele erläutert, die Prinzipschemata einzelner Aufbereitungsanlagen für Altpapier darstellen.

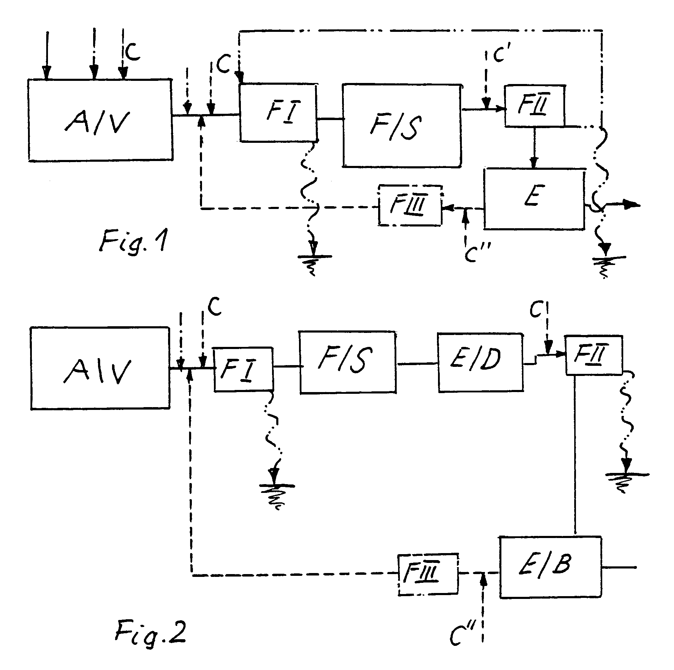

In Figur 1 ist eine Zweistufen-Flotation dargestellt, wobei A Auflösen, V Vorsortierung, F I die Flotations-Prozeßstufe I mit hoher Turbulenz, die auch mehrstufig sein kann, F Feinreinigung, S Sortierung, F II die Flotations-Prozeßstufe II mit relativ geringer Turbulenz und sehr feinen Luftbläschen, die auch mehrstufig ausgeführt sein kann, und E eine Entwässerungsstufe bedeuten. Diese Abkürzungen gelten auch für die übrigen Beispiele. Diese Behandlungsschritte sind im Hauptkreis angeordnet und es ist strichpunktiert noch ein Nebenkreis angedeutet, der eine Flotationsstufe dritter Art F III mit sehr beruhigter Flotation, z.B. Klärflotation, die einer Sedimentation entspricht, enthält, mit der Filtratwasser der Entwässerungsstufe weiter gereinigt werden kann. In der Flotationsstufe F I wird eine relativ große Luftmenge verwendet, so daß das Verhältnis der Luftmenge L zum Gesamtgewicht G der Suspension, bezogen auf Trockenmasse (otro), folgender Bedingung genügt: $30 \leq L/G \leq 100$ %. Die Luftblasengröße ist dermaßen anzusetzen, daß mindestens 80 % derselben größer als 1 mm im Durchmesser sind. Die Flotationsstufe F II verwendet wesentlich kleinere Luftblasen und auch eine wesentlich kleinere Luftmenge nach der Bedingung $L/G \leq$ als 30 %. Für die einzelnen Verfahrensstufen ist noch die Zugabe von Chemikalien durch die Pfeile C, C' bzw. C'' angedeutet. Die strichpunktiert angegebenen Pfeile bedeuten eine Wasserzugabe. Die Reinigungs- und Sortierstufen V, F und S entsprechen den üblichen Anlagen, wie z.B. auch aus der erwähnten "Paper-Technology", Seite 282, Figur 1, sowie DE-AS 26 10 581, Figur 1, hervorgeht.

Entsprechend der Anlage nach Figur 2 ist die Entwässerung E einschließlich einer Dispergiereinrichtung D vor die Flotationsstufe F II geschaltet. Es ist eine zweite Entwässerungsstufe nach der Flotationsstufe F II vorgesehen, die von einer Bleiche B begleitet ist. Das Abwasser beider Entwässerungsstufen wird ebenfalls durch eine Flotationsstufe F III gereinigt. Auch hier ist die Flotationsstufe F III von der Art derselben Stufe nach Figur 1 vorgesehen.

Anstelle das Flotationsrejekt der Stufe F II zu verwerfen, kann man es entsprechend der doppelpunkt-strichlierten Linie auch zu der ersten Flotationsanlage F I zurückführen.

**Patentansprüche**

1. Anlage zur Aufbereitung (Deinking) von Altpapier, mit mehreren hintereinandergeschalteten Reinigungsstufen, wovon eine eine, auch durch unmittelbare Hintereinanderschaltung einzelner Flotationszellen mehrstufige, Flotationsanlage beinhaltet, und bei der in einer weiteren Flotationsanlage eine weitere Abscheidung von Schmutz erfolgt, dadurch gekennzeichnet, daß im Hauptkreis der Gesamt-Aufbereitungsanlage zwei, jeweils für sich unter Umständen auch mehrstufige, Flotationsanlagen vorgesehen sind, von denen die erste mit starker Turbulenz und relativ großer Luftmenge (L) ein Luftmengenverhältnis von 30 ≤ L/G ≤ 100 % und die zweite mit schwacher Turbulenz, die knapp oberhalb der Grenze zur Faserflotation liegt, und einem Luftmengenverhältnis von L/G ≤ 30 % oder praktisch ohne Turbulenz arbeitet.

2. Anlage nach Anspruch 1, dadurch gekennzeichnet, daß eine weitere Flotationseinrichtung oder -Anlage vorgesehen ist, die mit nur schwacher, knapp oberhalb der Grenze zur Faserflotation liegender Turbulenz oder ohne Turbulenz zwecks Reinigung des Abwassers einer Entwässerungs- oder Waschstufe arbeitet.

3. Anlage nach Anspruch 1 oder 2, dadurch gekennzeichnet, daß die Luftblasenverteilung in der zweiten Flotationsanlage einen Anteil von mindestens 80 % von Luftblasen aufweist, deren Durchmesser kleiner als 1 mm ist.

4. Anlage nach Anspruch 3, dadurch gekennzeichnet, daß die Luftblasenverteilung in der zweiten Flotationsanlage einen Anteil von mindestens 60 % von Luftblasen aufweist, deren Durchmesser kleiner als 1 mm ist.

**Claims**

1. Apparatus for treating (deinking) waste paper, with a plurality of cleaning stages connected in series, whereof one contains a flotation plant having multiple stages due to the direct series connection of individual flotation cells, and in which, in a further flotation plant, a further separation of dirt takes place, characterised in that provided in the main circuit of the total treatment apparatus are two flotation plants which each also have multiple stages under certain circumstances, whereof the first operates with high turbulence and a relatively large quantity of air (L) with an air volume ratio of 30 ≤ L/G ≤ 100% and the second operates with low turbulence, which is just above the limit for fibre flotation, and an air volume ratio of L/G ≤ 30 % or virtually without turbulence.

2. Apparatus according to Claim 1, characterised in that a further flotation device or plant is provided, which operates with only low turbulence lying just above the limit for fibre flotation or without turbulence for the purpose of cleaning the waste water from a draining or washing stage.

3. Apparatus according to Claim 1 or 2, characterised in that the air bubble distribution in the second flotation plant has a proportion of at least 80% air bubbles, whereof the diameter is less than 1 mm.

4. Apparatus according to Claim 3, characterised in that the air bubble distribution in the second flotation plant has a proportion of at least 60% air bubbles, whereof the diameter is less than 1 mm.

**Revendications**

1. Dispositif pour le traitement (Deinking) des vieux papiers, avec plusieurs postes sucessifs de nettoyage, dont un comprend une installation de flottation également à plusieurs étapes par succession immédiate de cellules de flottation ; dans une deuxième installation de flottation se produit une deuxième séparation des déchets, caractérise :
   en ce que, dans le circuit principal de la totalité du dispositif de traitement, il est prévu deux installations de flottation qui peuvent éventuellement être, chacune séparément, à plusieurs étapes, la première installation travaillant avec une forte turbulence et un volume d'air (L) relativement important d'un rapport volumétrique de 30 ≤ L/G ≤ 100%, et la deuxième installation travaillant avec une faible turbulence juste au-dessus de la limite de flottation des fibres dont le rapport volumétrique est de L/G ≤ 30%, ou pratiquement sans turbulence.

2. Dispositif selon la revendication 1, caractérisé :
   en ce qu'il est prévu une autre installation de flottation, travaillant avec seulement une faible turbulence juste au-dessus de la limite de flottation des fibres, ou sans turbulence, pour l'épuration des eaux usées au cours d'une étape d'extraction de l'eau ou de lavage.

3. Dispositif selon la revendication 1 ou 2, caractérisé :

en ce que la répartition des bulles d'air dans la deuxième installation de flottation présente une proportion de bulles d'air d'au moins 80%, leur diamètre étant inférieur à 1 mm.

4. Dispositif selon la revendication 3, caractérisé :

en ce que la répartition des bulles d'air dans la deuxième installation de flottation présente une proportion de bulles d'air d'au moins 60%, leur diamètre étant inférieur à 1 mm.

Fig. 1

Fig. 2